Europäisches Patentamt

**European Patent Office**

Office européen des brevets

(19)

(11) Veröffentlichungsnummer: **0 060 415**

**B1**

(12) **EUROPÄISCHE PATENTSCHRIFT**

(45) Veröffentlichungstag der Patentschrift: **15.04.87**

(21) Anmeldenummer: **82101429.7**

(22) Anmeldetag: **25.02.82**

(51) Int. Cl.⁴: **G 05 D 23/24**, G 05 D 23/19, G 05 B 1/02

(54) **Regel- oder Steuergerät.**

(30) Priorität: **16.03.81 CH 1759/81**

(43) Veröffentlichungstag der Anmeldung:
**22.09.82 Patentblatt 82/38**

(45) Bekanntmachung des Hinweises auf die
Patenterteilung:
**15.04.87 Patentblatt 87/16**

(84) Benannte Vertragsstaaten:
**AT CH DE FR IT LI**

(56) Entgegenhaltungen:
**DE-A-2 335 372**
**DE-A-2 739 538**
**DE-A-3 024 945**
**DE-C-1 253 340**

(73) Patentinhaber: **ELESTA AG ELEKTRONIK**
**CH-7310 Bad Ragaz (CH)**

(72) Erfinder: **Reiner, Eugen**
**Feld**
**CH-7324 Vilters (CH)**

(74) Vertreter: **Riederer, Conrad A., Dr.**
**Bahnhofstrasse 10**
**CH-7310 Bad Ragaz (CH)**

Courier Press, Leamington Spa, England.

**Beschreibung**

Die Erfindung betrifft ein Regel- oder Steuergerät mit einem eingebauten Einstellwiderstand für den Soll- oder Steuerwert, z.B. einer Raumtemperatur, und einem zusätzlich an zwei Klemmen des Gerätes mit beliebig vertauschbaren Leitern anschließbaren Ferneinstellwiderstand gemäß Oberbegriff von Anspruch 1.

Bei Regelgeräten für Heizungs- Lüftungs- oder Klimaanlagen ist normalerweise der Einstellwiderstand, z.B. ein Potentiometer, am Gerät selbst angebracht. Da sich diese Geräte meist in unmittelbarer Nähe der Heizungsanlage befinden, ist ein Gang dorthin notwendig, um beispielsweise die Temperatur von 20°C auf 19°C oder 21°C einzustellen. Es ist aber auch schon bekannt, bei solchen Regelgeräten ein Ferneinstellwiderstand vorzusehen, mit dem eine Veränderung des Sollwertes nach oben und nach unten möglich ist. Um einen solchen Ferneinstellwiderstand anzuschließen ist es bei einem bekannten Regelgerät notwendig, einen Widerstand zu entfernen, der einen Standard-Sollwert festsetzt. Dies mache es praktisch unmöglich daß der Ferneinstellwiderstand noch nachträglich durch einen Nichtfachmann, z.B. vom Hauseigentümer, selbst angeschlossen werden kann.

In der DE—A 2 335 372 wird eine Schaltungsanordnung beschrieben, mit zwei Sollwertstellern, die vorzugsweise alternativ zu einer Messbrücke zu- oder abgeschaltet werden können. Jeder dieser Sollwertsteller benötigt nicht nur zwei sondern drei Anschlüsse, die zudem nicht beliebig vertauschbar sind. Wenn somit ein Sollwertsteller als Ferneinstellwiderstand dienen soll, so ergibt sich ein Anschlussproblem, das nicht durch einen Nichtfachmann gelöst werden kann.

Es ist daher Aufgabe der Erfindung, bei einem Regel- oder Steuergerät der eingangs erwähnten Art den Anschluss eines Ferneinstellwiderstandes zu ermöglichen, das eine beliebige skalierbare Änderung des Sollwertes nach oben und nach unten gestattet. Das Anschließen des Ferneinstellwiderstandes soll mit nur zwei beliebig vertauschbaren Leitern an zwei Klemmen des Gerätes erfolgen können, ohne daß von diesem Gerät irgendwelche Teile entfernt und ohne daß irgendwelche Verbindungen geändert werden müssen.

Gemäß der Erfindung wird dies durch das Kennzeichen von Anspruch 1. Hierbei ist ein einen Transistor aufweisender Steuerkreis vorgesehen, welcher bei mit beliegig vertauschbaren Anschlüssen angeschlossenem Ferneinstellwiderstand der eingebaute Einstellwiderstand zur Veränderung des Soll- oder Steuerwerts nach oben und nach unten dadurch unwirksam macht. Dies ermöglicht es, dass auch ein Nichtfachmann die Ferneinstellung mit zwei beliebig vertauschbaren Leitern an zwei Klemmen des Gerätes anschliessen kann. Da ferner keine Teile ausgebaut werden müssen, ist auch nach der Entfernung des Ferneinstellwiderstandes das Regel- oder Steuergerät sofort wieder voll funktionsfähig. Bei nicht angeschlossenem Ferneinstellwiderstand ist der Transistor leitend, so daß er den eingebauten Einstellwiderstand in Serie mit dem zweiten Widerstand schaltet.

Wegen der hohen Stromverstärkung des Transistors ist es möglich, den vierten Widerstand so hochohmig zu wählen, daß der Einfluss des Zweiges mit dem dritten und vierten Widerstand vernachlässigbar ist.

Bei angeschlossenem Ferneinstellwiderstand, wenn dieser auf den Minimalwiderstandwert gestellt ist, wird der Transistor abgeschaltet. Es sind somit nur noch der dritte Widerstand und das Ferneinstellglied wirksam. Vorzugsweise wird der dritte Widerstand so dimensioniert, dass dabei der maximale Spannungswert am Soll- oder Steuerwertpunkt erreicht wird.

Bei Maximalwiderstand des Ferneinstellwiderstandes sind sowohl der dritte Widerstand und der Ferneinstellwiderstand wirksam. Zugleich wirkt der Spannungsabfall am Ferneinstellwiderstand als Steuerspannung für den Transistor. Durch die Bemessung des zweiten Widerstandes wird der Transistorstrom so festgelegt, dass der gewünschte Minimal-Soll oder Steuerwert festgelegt ist. Im Zwischenbereich lässt sich der regel- oder steuerwirksame Spannungsabfall genau entsprechend der Verstellung des Ferneinstellglieds einstellen. Es ist somit möglich, das Ferneinstellglied mit einer Skala zu versehen, um den Sollwert sowohol nach oben wie nach unten zu ändern.

Der Einfachheit halber könnte die Basis-Emitter-Durchlassspannung von etwa 0,65 V vernachlässigt werden, da sie bei hoher Speisespannung nicht ins Gewicht fällt. Gemäß einem Ausführungsbeispiel der Erfindung können jedoch in Serie mit dem Ferneinstellwiderstand zwei antiparallel geschaltete Dioden angeordnet werden, um unter Beibehaltung der Vertauschbarkeit der Anschlüsse die Basis-Emitter-Durchlassspannung zu kompensieren.

Ausführungsbeispiele der Erfindung werden nun unter Bezugnahme auf die Zeichnung beschreiben. Es zeigt:

Fig. 1 Teil eines Schemas eines bekannten Regelgerätes mit einem eingebauten Einstellglied und zwei Klemmen zum Anschluß eines Ferneinstellwiderstandes, wobei jedoch zum Anschluß des Ferneinstellwiderstandes der eingebaute Einstellwiderstand entfernt werden muß.

Fig. 2 eine Schaltung wie in Figur 1, wobei jedoch ein Steuerkreis vorgesehen ist, welcher bei angeschlossenem Ferneinstellwiderstand den eingebauten Einstellwiderstand zur Veränderung des Soll- oder Steuerwertes nach oben und nach unten unwirksam macht.

Fig. 3 der Ferneinstellwiderstand gemäß Figur 2, jedoch mit zwei antiparallel geschalteten Dioden zur Kompensation der Basis-Emitter-Duchlaßspannung.

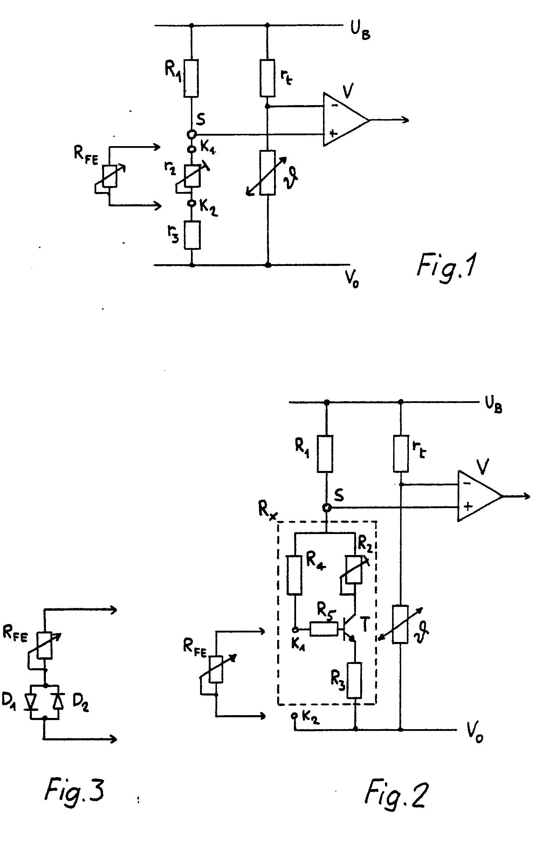

Bei der bekannten Schaltung von Figur 1 für ein Regelgerät sind Widerstandsbrücken $R_1$, $R_2$, $r_3$; $r_t$, u für

den Sollwert und für den Istwert an die Eingänge des Operationsverstärkers V angeschlossen, dessen Ausgang beispielsweise über ein Relais das Ein- und Ausschalten eines Ölbrenners steuert. Es ist also einer vier Äste ($R_1$, $r_2$, $r_3$; $r_t$; u) aufweisende Brückenschaltung vorgesehen, in deren Brückendiagonale der Operationsverstärker V liegt.

Die Brücke für den Sollwert besteht aus den Widerständen $R_1$, $r_2$ und $r_3$, die in Serie geschaltet sind. Vom Soll- oder Steuerwertpunkt S, der zwischen den beiden Widerständen $R_1$, $r_2$ liegt, führt eine Leitung zu einem Anschluß des Operationsverstärkers V. Der Widerstand $r_2$ ist veränderbar und beispielsweise durch Werkeinstellung auf einen Standardsollwert eingestellt. Dieser Widerstand $r_2$ liegt zwischen den beiden Klemmen $K_1$ und $K_2$. An diese Klemmen $K_1$ und $K_2$ ist ein Ferneinstellpotentiometer $R_{FE}$ anschließbar. Vor dem Anschließen muß jedoch der Widestand $r_2$ entfernt werden, ansonst wegen der Parallelschaltung der beiden Widerstände $R_{FE}$ und $r_2$ der Sollwert nur in einer Richtung veränderbar wäre.

Bei der Schaltung gemäß Figur 2 ist wesentlich, daß im Gegensatz zur vorbekannten Schaltung von Figur 1 zum Anschluß des Ferneinstellpotentiometers $R_{FE}$ keine Teile entfernt werden oder Verbindungen geändert werden müssen. Trotzdem ist eine Veränderung des Sollwertes sowohl nach oben wie nach unten möglich, und der Anschluß des Ferneinstellpotentiometers $R_{FE}$ kann mit zwei beliebig vertauschbaren Leitern erfolgen.

Der eingebaute Einstellwiderstand $R_2$ ist mit einem Transistor T und einem zweiten Widerstand $R_3$ in Serie zwischen dem Sollwertpunkt S und der einen Klemme $K_2$ geschaltet. Ein dritter Widerstand $R_4$ ist zwischen dem Sollwertpunkt S und der anderen Klemme $K_1$ für das Ferneinstellglied $R_{FE}$ vorgesehen. Schliesslich befindet sich ein viertar Widerstand $R_5$ zwischen der Klemme $K_1$ und der Basis des Transistors T. Der Ferneinstellwiderstand $R_{FE}$ ist als veränderbarer Wliderstand an die Klemmen $K_1$ und $K_2$ anschaltbar.

Ein Vergleich der Figuren 1 und 2 zeigt, dass in Figur 2 die Widerstände $r_2 + r_3$ durch die Kombination $R_4 + R_5$, zu welcher $R_2$ parallel liegt, in Serieschaltung mit $R_3$ ersetzt sind. Für gleiche Sollwertbedingungen gilt daher:

$$r_2 + r_3 \approx \frac{(R_4 + R_5) \cdot R_2}{R_4 + R_5 + R_2} + R_3 = R_x \text{ Grundeinstellung.}$$

Bei Verwendung eines hochverstärkenden Transistors (z.B. $\beta \approx 400$) wird der Widerstand $R_5$ relativ zu $R_2$ hochohmig gewählt, so dass folgendes in grober Näherung gilt:

$$r_2 + r_3 \approx R_2 + R_3 \approx R_x \text{ Grundeinstellung.}$$

Grundsätzlich hat somie die Schaltung von Figur 2 bei nicht angeschlossenem Ferneinstellpotentiometer den gleichn Effekt wie die Schaltung von Figur 1 bei nicht angeschlossenem Ferneinstellpotentiometer.

Betrachtet man nun die Schaltung von Figur 2 bie angeschlossenem Ferneinstellpotentiometer $R_{FE}$, so ist ersichtlich, daß wenn das Potentiometer $R_{FE}$ auf einen Widerstandwert von praktisch Null eingestellt ist, kein Strom über den Widerstand $R_5$ fließen kann und somit der Transistor T sperrt. Infolgedessen ist nur noch der Widerstand $R_4$ wirksam.

$R_4$ ist so ausgeleget, dass

$$r_2 \text{ max} + r_3 = R_4 = R_{x \, max}.$$

Dies bedeutet also, dass $R_{x \, max}$ hochohmiger ist als $R_x$ Grundeinstellung ohne angeschaltetem Ferneinstellpotentiometer.

Umgekehrt ist bei der Einstellung des Ferneinstellpotentiometers auf den Maximalwiderstand der Transistor T leitend, wobei am Gegenkopplungswiderstand $R_3$ praktisch derselbe Spannungsabfall auftritt, wie am Ferneinstellpotentiometer $R_{FE}$. Somit wird $R_x$ niederohmiger, da sowohl der Widerstand $R_4$ und der Widerstand $R_2$ wirksam sind. Es gilt:

$$r_2 \text{ min} + r_3 \approx \frac{(R_4 + R_{FE \, max}) \cdot (R_2 + R_3)}{R_4 + R_{FE \, max} + R_2 + R_3} = R_{x \, min}$$

Der Spannungsabfall am Ferneinstellpotentiometer $R_{FE}$ und am Widerstand $R_3$ sollte relativ klein im Vergleich zur Sollwertspannung gewählt werden. Nachem vorangehend die Extremwerte $R_{x \, max}$ und $R_{x \, min}$ angegeben werden sind, ist ersichtlich, dass die Zwischenwerte durch Verstellen des Ferneinstellpotentiometer stetig einstellbar sind, da die Spannung am Gegenkopplungswiderstand $R_3$ stets derjenigen von $R_{FE}$ folgt. Damit folgt natürlich auch der zugehörige Strom durch den Widerstand $R_3$. Dieser Strom ist praktisch mit dem Kollektorstrom des Transistors T identisch und fliesst durch den Widerstand $R_2$, welcher dem Wert des Ferneinstellpotentiometers proportional ist. Folglich sind zwischen $R_{x \, min}$ (maximaler Strom durch den Transistor) und $R_{x \, max}$ (kein Strom durch den Transistor) alle Werte stetif nachbildbar. Der maximale Wert des Widerstandes $R_2$ ist aber so zu wählen, daß der Spannung am Transistor T vom Kollektor zum Emitter nie kleiner als ungefähr 1 V wird.

# 0 060 415

Beim Ausführungsbeispiel von Figur 2 ist die Basis-Emitter-Durchlassspannung von etwa 0,65 Volt vernachlässigt worden, da sie bei hoher Speisespannung nicht ins Gewicht fällt. Die Durchlaßspannung kann jedoch unter Beibehaltung der Vertauschbarkeit der Anschlüsse des Ferneinstellpotentiometers $R_{FE}$, wie in Figur 3 gezeigt, durch zwei antiparallel geschaltete Dioden $D_1$ und $D_2$ in Serie zum Fernein- stellpotentiometer $R_{FE}$ voll kompensiert werden.

## Patentansprüche

1. Regel- oder Steuergerät mit einem eingebauten Einstellwiderstand ($R_2$) für den Soll- oder Steuerwert, z.B. einer Raumtemperatur, und einem zusätzlich an zwei Klemmen ($K_1$, $K_2$) des Geräts mit beliebig vertauschbaren Leitern anschließbaren Ferneinstellwiderstand ($R_{FE}$), welches Gerät eine Widerstandsbrückenschaltung mit vier Ästen ($R_1$, $R_x$, $r_t$, u) aufweist, in deren Brückendiagonale zwei Eingänge eines Operationsverstärkers (V) liegen, wobei der mit einem der beiden Eingänge des Operationsverstärkers (V) leitend verbundene Soll- oder Steuerwertpunkt (S) am Verbindungspunkt zwischen den eine Sollwertbrücke bildenden zwei Ästen ($R_1$, $R_x$) liegt, dadurch gekennzeichnet, daß in einem Ast ($R_x$) dieser Sollwertbrücke die Kollektor-Emitter-Strecke eines Transistors (T) in Serie zwischen dem eingebauten Einstellwiderstand ($R_2$) und einem zweiten Widerstand ($R_3$) geschaltet ist, wobei das vom Transistor (T) abgewandte Ende des eingebauten Einstellwiderstandes ($R_2$) mit dem Soll- oder Steuter = wertpunkt (S) und das vom Transistor (T) abgewandte Ende des zweiten Widerstanden ($R_3$) mit einer der beiden Klemmen ($K_2$) leitend verbunden ist daß ein dritter Widerstand ($R_4$) zwischen dem Soll- oder Steuerwertpunkt (S) und der anderen Klemme ($K_1$) geschaltet ist, daß eine vierter Widerstand ($R_5$) zwischen der genannten anderen Klemme ($K_1$) und der Basis des Transistors (T) angeordnet ist, wobei bei nicht-angeschlossenem Ferneinstellwiderstand ($R_{FE}$) der Transistor (T) leitend und somit der eingebaute Einstellwiderstand ($R_2$) wirksam ist, aber bei angeschlossenem Ferneinstellwiderstand ($R_{FE}$) der eingebaute Einstellwiderstand ($R_2$) unwirksam gemacht wird, indem der durch den Transistor (T) fließende Strom durch den eingestellten Wert des Ferneinstellglieds ($R_{FE}$) bestimmt wird, so daß der Soll- oder Steuerwert mit diesem nach oben oder unten verändert werden kann.

2. Regel- oder Steuergerät nach Anspruch 1, dadurch gekennzichnet, daß der eingebaute Einstell- widerstand ($R_2$) und der Ferneinstellwiderstand ($R_{FE}$) jeweils als Potentiometer ausgebildet sind.

3. Regel- und Steuergerät nach Anspruch 2, dadurch gekennzeichnet, daß der vierte Widerstand ($R_5$) so hochohmig in Bezug auf den Widerstand des eingebauten Einstellwiderstandes ($R_2$) gewählt ist, daß der Einfluß des Zweiges mit dem dritten ($R_4$) und vierten Widerstand ($R_5$) auf die Regel- und Steuerwirkung vernachlässigbar ist, wenn der Ferneinstellwiderstand ($R_{FE}$) nicht angeschlossen ist.

4. Regel- und Steuergerät nach Anspruch 2 oder 3, dadurch gekennzeichnet, daß bei angeschaltetem Ferneinstellwiderstand ($R_{FE}$) der Widerstand desselben regel- oder steuerwirksam ist und der Spannungsabfall am Ferneinstellwiderstand ($R_{FE}$) zugleich als Steuerspannung am Transistor (T) wirkt.

5. Regel- oder Steuergerät nach einem der Ansprüche 2 bis 4, dadurch gekennzeichnet, daß der zweite Widerstand ($R_3$) derart bemessen ist, daß der Transistorstrom festgelegt wird, der für den Minimal-Soll- oder Steuerwert notwendig ist.

6. Regel- oder Steuergerät nach einem der Ansprüche 2 bis 5, dadurch gekennzeichnet, daß in Serie mit dem Ferneinstellwiderstand ($R_{FE}$) zwei antiparallel geschaltete Dioden ($D_1$, $D_2$) angeordnet sind.

## Revendications

1. Appareil de réglage ou de commande, comprenant une résistance de réglage incorporée ($R_2$) pour la valeur de consigne ou de commande, de la température ambiante par exemple, et une résistance additionnelle de réglage à distance ($R_{FE}$) pouvant être raccordée à deux bornes ($K_1$, $K_2$) de l'appareil par des conducteurs interchangeables à volonté, lequel appareil possède un montage en pont de résistances, à quatre branches ($R_1$, $R_x$, $r_t$, u), sur la diagonale duquel se trouvent deux entrées d'un amplificateur opérationnel (V), de telle sorte que le point de valeur de consigne ou de commande (S), qui est en liaison conductrice avec l'une des deux entrées de l'amplificateur opérationnel (V), se trouve au point de jonction entre deux branches ($R_1$, $R_x$) formant un pont de valeur de consigne, caractérisé en ce que dans l'une des branches $R_x$ de ce pont de valeur de consigne, le trajet collecteur-émetteur d'un transistor (T) est branché en série entre la résistance de réglage incorporée ($R_2$) et une deuxième résistance ($R_3$), de telle sorte que l'extrémité opposée au transistor (T) de la résistance de réglage incorporée ($R_2$) est reliée au point de valeur de consigne ou de commande (S) et que l'extrémité opposée au transistor (T) de la deuxième résistance ($R_3$) est électriquement reliée à l'une des deux bornes ($K_2$), en ce qu'une troisième résistance ($R_4$) est montée entre le point de la valeur de consigne ou de commande (S) et l'autre borne ($K_1$), en ce qu'une quatrième résistance ($R_5$) est branchée entre l'autre borne précitée ($K_1$) et la base du transistor (T), de telle sorte que le transistor (T) est conducteur lorsque la résistance de réglage à distance ($R_{FE}$) n'est pas branchée, et que de ce fait la résistance de réglage incorporée ($R_2$) est opérante, mais de telle sorte que, lorsque la résistance de réglage à distance ($R_{FE}$) est branchée, la résistance de réglage incorporée ($R_2$) est rendue inopérante, par le fait que le courant traversant le transistor (T) est défini par la valeur ajustée de la résistance de réglage à distance ($R_{FE}$), de telle sorte que la valeur de consigne ou de commande puisse être modifiée par celle-ci en plus ou en moins.

4

2. Appareil de réglage ou de commande selon la revendication 1, caractérisé en ce que la résistance de réglage incorporée ($R_2$) et la résistance de réglage à distance ($R_{FE}$) sont conçues chacune sous la forme d'un potentiomètre.

3. Appareil de réglage et de commande selon la revendication 2, caractérisé en ce que la quatrième résistance ($R_5$) a une valeur ohmique suffisamment élevée par rapport à la résistance de réglage incorporée ($R_2$) pour que l'influence de la branche formée par la troisième résistance ($R_5$) et par la quatrième résistance ($R_5$) sur l'effet de réglage et de commande soit négligeable lorsque la résistance de réglage à distance ($R_{FE}$) n'est pas branchée.

4. Appareil de réglage et de commande selon la revendication 2 ou 3, caractérisé en ce que, lorsque le résistance de réglage à distance ($R_{FE}$) est branchée, sa résistance est efficace pour le réglage ou la commande, et la chute de tension aux bornes de la résistance de réglage à distance ($R_{FE}$) sert en mème temps de tension de commande pour le transistor (T).

5. Appareil de réglage ou de commande selon l'une des revendications 2 à 4, caractérisé en ce que la deuxième résistance ($R_3$) est dimensionnée de telle sorte que le courant du transistor nécessaire à la valeur minimale de consigne ou de commande, soit fixé.

6. Appareil de réglagé ou de commande selon l'une des revendications 2 à 5, caractérisé en ce que deux diodes en montage antiparallèle ($D_1$, $D_2$) sont montés en série avec la résistance de réglage à distance ($R_{FE}$).

**Claims**

1. Regulation or control device comprising a built-in regulation resistance ($R_2$) for the rated value or reference value, for instance for the room temperature, and, for remote operation, an additional resistance ($R_{FE}$) capable of being connected by interchangeable leads to two terminals ($K_1$, $K_2$) of said device, said device further comprising a resistance bridge with four branches ($R_1$, $R_x$, $r_t$, u), in the diagonal of said resistance bridge there being two inputs of an operational amplifier (V), so that the point (S) of the rated value or the reference value, said point (S) being connected to one of the two inputs of the operational amplifier (V), is located at the connection of two branches ($R_1$, $R_x$) forming a rated value bridge, characterized in that in one branch ($R_x$) of said rated value bridge the collector-emitter path of a transistor (T) is connected in series between the built-in regulating resistance ($R_2$) and a second resistance ($R_3$), so that of the second resistance ($R_2$) the end which is distant from the transistor (T) is electrically connected to the point (S) of the rated value or reference value, and that of the second resistance ($R_3$) the end which is distant from the transistor (T) is electrically connected to one ($K_2$) of the two terminals, that a third resistance ($R_4$) is connected between the point (S) of the rated value or reference value and the other terminal ($K_1$), that a fourth resistance ($R_5$) is located between said other terminal ($K_1$) and the basis of the transistor (T), so that, if the resistance ($R_{FE}$) for remote operation is not connected, the transistor (T) is conducting and the built-in regulating resistance ($R_2$) is operating, and that, if the resistance ($R_{FE}$) for remote operation is connected, the built-in regulation resistance ($R_2$) is made inoperative in that the current flowing through the transistor (T) is defined by the value set on the resistance ($R_{FE}$) for remote operation, so that by said resistance ($R_{FE}$) the rated value or reference value may be increased or decreased.

2. Regulation or control device as in claim 1, characterized in that the built-in resistance ($R_2$) and the resistance ($R_{FE}$) are potentiometers.

3. Regulation or control device as in claim 2, characterized in that the fourth resistance ($R_5$) is of a sufficiently high ohmic value with reference to the built-in regulating resistance ($R_2$) that the influence of the branch formed by the third resistance ($R_4$) and the fourth resistance ($R_5$) on the regulating or control effect can be neglected, if the resistance ($R_{FE}$) for remote operation is not connected.

4. Regulation or control device as in claim 2 or 3, characterized in that, if the resistance ($R_{FE}$) for remote operation is connected, its resistance is effective for regulation or control, and that the voltage drop on the resistance ($R_{FE}$) serves also as control voltage for the transistor (T).

5. Regulation or control device as in one of claims 2 to 4, characterized in that the second resistance ($R_3$) is so dimensioned that the transistor current necessary for the minimum rated value or the minimum reference value is set.

6. Regulation or control device as in one of the claims 2 to 5, characterized in that the two diodes ($D_1$, $D_2$) switched antiparallel are located in series with the resistance ($R_{FE}$) serving for remote operation.

Fig.1

Fig.3

Fig.2